# EUROPÄISCHE PATENTSCHRIFT

(11) **EP 1 656 725 B1**
(45) Veröffentlichungstag und Bekanntmachung des Hinweises auf die Patenterteilung: **10.04.2013**
(21) Anmeldenummer: 04766491.7
(22) Anmeldetag: 13.08.2004
(51) Int. Cl.: H02K 1/24, H02K 15/16, H02K 19/10, H02K 29/08

(54) **RELUKTANZMOTOR**
RELUCTANCE MOTOR
MOTEUR A RELUCTANCE

(30) Priorität: 18.08.2003 DE 10337939
(43) Veröffentlichungstag der Anmeldung: 17.05.2006
(60) Teilanmeldung: 09151306.9
(73) Patentinhaber: Vorwerk & Co. Interholding GmbH, 42275 Wuppertal (DE)
(72) Erfinder: CALDEWEY, Uwe, 44229 Dortmund (DE); LIENENLÜKE, Paul, 45549 Sprockhövel (DE); THEUERMANN, Volker, 42270 Wuppertal (DE)
(74) Vertreter: Müller, Enno
(86) Internationale Anmeldenummer: PCT/EP2004/051788
(87) Internationale Veröffentlichungsnummer: WO 2005/020411

(56) Entgegenhaltungen:
- EP-A- 0 625 819
- EP-A- 0 817 355
- DE-A- 10 020 946
- DE-U- 20 022 406
- US-A- 4 698 537
- US-A- 5 111 095
- US-A- 5 432 390
- US-A- 5 780 945
- US-A- 5 808 389
- US-B1- 6 520 012

## Beschreibung

Die Erfindung betrifft einen Reluktanzmotor nach den Merkmalen des Oberbegriffes des Anspruches 1.

Reluktanzmotoren der in Rede stehenden Art sind bekannt. So wird bspw. auf die DE 100 35 540 A1 verwiesen. Dort ist ein Reluktanzmotor dargestellt und beschrieben, dessen Rotor mit vier winkelmäßig gleichmäßig verteilt angeordneten Rotorsegmenten versehen ist. Diese Rotorsegmente ragen, bezogen auf die Rotordrehachse, radial nach außen ab und weisen einen im Wesentlichen rechteckigen Grundriss auf, wobei die radial nach außen weisende Stirnseite im Grundriss kreisabschnittförmig gestaltet ist.

Aus der US 4,698,537 ist ein Reluktanzmotor bekannt, bei welchem Rotorsegmente im freistehenden Bereich dem Stator zugeordnet einen im Grundriss rechteckigen Bereich aufweist, an den sich statorseitig eine Abwinklung im Sinne einer Vergrößerung des Umfangsmaßes anschließt und weiterhin statorseitig eine über die Flachseiten schirmseitig überstehender Randbereich. Die Eckbereiche des Randbereiches gehen spitzwinklig in eine Unterfläche dieses Randbereiches über und dieser Randbereich geht weiterhin rechtwinklig in den genannten erweiterten Bereich über.

Die US 5,432,390 beschreibt einen Reluktanzmotor bei welchem die Übergänge zwischen den Polen des Rotors im Grundriss kontinuierlich konkav gestaltet sind. Darüber hinaus ist eine Ecke des Übergangs in die Stirnfläche gerundet gestaltet.

Aus der US 5,111,095 ist ein Reluktanzmotor bekannt, bei welchem die eckig gestalteten Übergänge von der Stirnseite in die Flachseiten bzgl. einer gradlinigen Verlängerung der Flachseiten jenseits dieser gradlinigen Verlängerung ausgebildet sind.

Die Erfindung beschäftigt sich mit der Aufgabe, einen Reluktanzmotor mit im freistehenden Bereich im Wesentlichen rechteckig geformten Rotorsegmenten anzugeben, der bei günstiger Funktion vorteilhaft gestaltet ist.

Diese Aufgabe ist beim Gegenstand des Anspruches 1 gelöst. Es ist darauf abgestellt, dass die Übergänge abgerundet gestaltet sind , dass der Radius der Abrundung zwischen 0,3 und 2 mm liegt und dass die Rotorsegmente im Bereich der Übergänge eine quer zur Radialerstreckung der Rotorsegmente gemessene Breite aufweisen, die dem 1,1 bis 1,3-fachen der in selber Richtung gemessenen Breite der Rotorsegmente im Bereich der Flachseiten entspricht. Es liegen keine scharfkantigen Eckbereiche zwischen Stirnseite und Flachseiten der Rotorsegmente vor. Vielmehr sind diese Eckbereiche abgerundet, so dass im Zuge der Fertigung des Reluktanzmotors das Einsetzen des Rotors in den Stator vereinfacht ist. Im Zuge des Einsetzens des Rotors in den Stator ergibt sich kein Verhaken, was bei scharfkantigen Eckbereichen auch zu Beschädigungen führen könnte. Da das Abrunden der Eckbereiche grundsätzlich eine gewisse Materialeinbuße bedeutet, ist insofern eine Verbreiterung der Eckbereiche vorgesehen, welche verbreiterten Eckbereiche mit der erfindungsgemäßen Verrundung versehen sind. Demzufolge bleibt die gewünschte Rundung ohne Einfluss auf die Motorcharakteristik. Die Übergänge sind auch in Umfangsrichtung jeweils jenseits einer geradlinigen Verlängerung der Flachseiten ausgebildet. Die quer zur Radialerstreckung der Rotorsegmente gemessene Breite entspricht bevorzugt dem 1,2-fachen der in selber Richtung gemessenen Breite der Rotorsegmente im Bereich der Flachseiten. Der Radius der Abrundung liegt bevorzugt bei etwa 0,5 mm.

Der Rotor besteht aus einer Vielzahl von dünnen Blechen, die axial übereinander angeordnet sind, zusammengesetzt ist. So können gestanzte Bleche zum Einsatz kommen, welche axial übereinander angeordnet eine variable Rotorhöhe erlauben. Durch Anordnung mehr oder weniger Rotorbleche ist das Rotorpaket in Rotorachsrichtung variabel gestaltbar, was insbesondere die Herstellung des Rotors erleichtert. Um das durch die Bleche geschaffene Rotorpaket zu festigen, ist vorgesehen, dass die Bleche miteinander verklebt sind. Bevorzugt wird diesbezüglich, dass die Verklebung aufgrund einer Backlackbeschichtung der Bleche erreicht ist. Durch den Einsatz derartiger Backlackbleche und entsprechender thermischer Behandlung ist eine weitere Verbesserung der Stabilität des Rotors erreicht. Unter Backlackblechen versteht man Bleche, welche gegebenenfalls zusätzlich zu einer beidseitigen Isolierschicht noch eine Backlackschicht aufweist. Diese Backlackschicht geht bei Temperaturerhöhung (Backen) in einen Klebezustand über. Durch diese Verklebung wird eine Verbindung der Einzelrotorbleche zu einem Gesamtrotorpaket erreicht, was sich hinsichtlich der Auswuchtung und der Stabilität als vorteilhaft erweist. Auch ein Verdrehen der Einzelbleche zueinander wird durch die Verklebung verhindert.

Nachstehend ist die Erfindung anhand der beigefügten Zeichnungen, welche lediglich ein Ausführungsbeispiel darstellen, näher erläutert. Es zeigt:
- Fig. 1: einen erfindungsgemäßen Reluktanzmotor in einer perspektivischen Zusammenbaudarstellung;
- Fig. 2: den Reluktanzmotor in einer perspektivischen Explosionsdarstellung;
- Fig. 3: den Rotor mit einer drehfest angeordneten Geberscheibe und einem gleichfalls drehfest angeordneten Lüfter in perspektivischer Einzeldarstellung;
- Fig. 4: den vergrößerten Schnitt gemäß der Linie IV-IV in Fig. 3;
- Fig. 5: die Draufsicht auf den Rotor mit Blick auf die Geberscheibe;

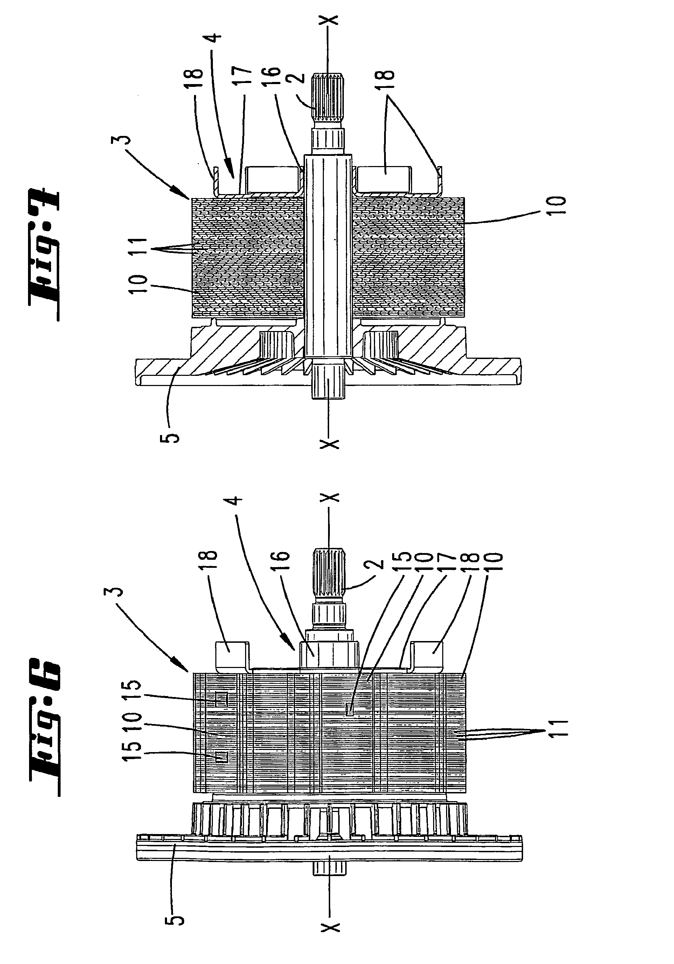

- Fig. 6: die Seitenansicht hierzu;
- Fig. 7: den Schnitt gemäß der Linie VII-VII in Fig. 5;
- Fig. 8: ein Rotorblech in Draufsicht;
- Fig. 9: die Herausvergrößerung des Bereichs IX in Fig. 8;
- Fig. 10: das Rotorblech in perspektivischer Darstellung;

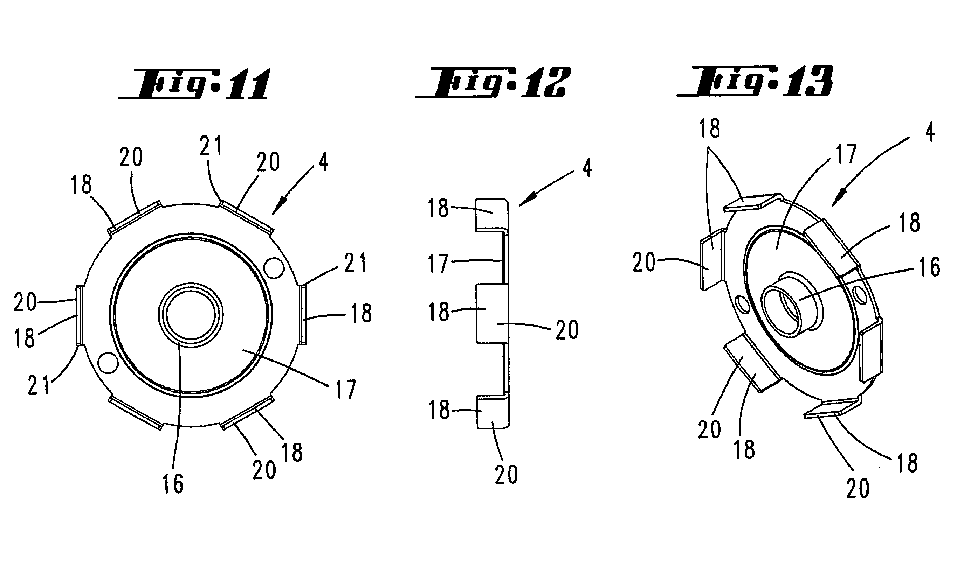

- Fig. 11: die Geberscheibe in einer Einzeldraufsicht;
- Fig. 12: die Seitenansicht der Geberscheibe;
- Fig. 13: eine perspektivische Darstellung der Geberscheibe.

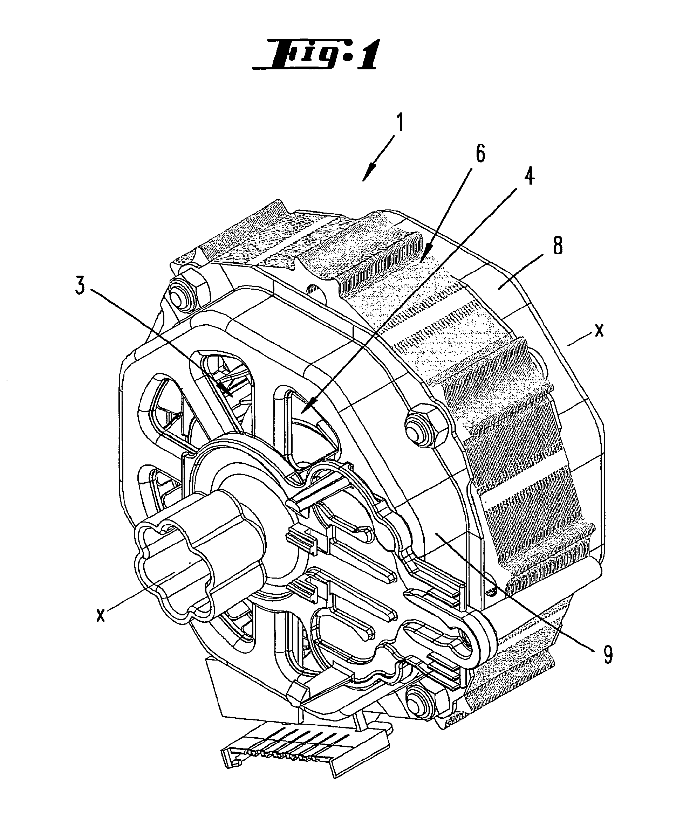

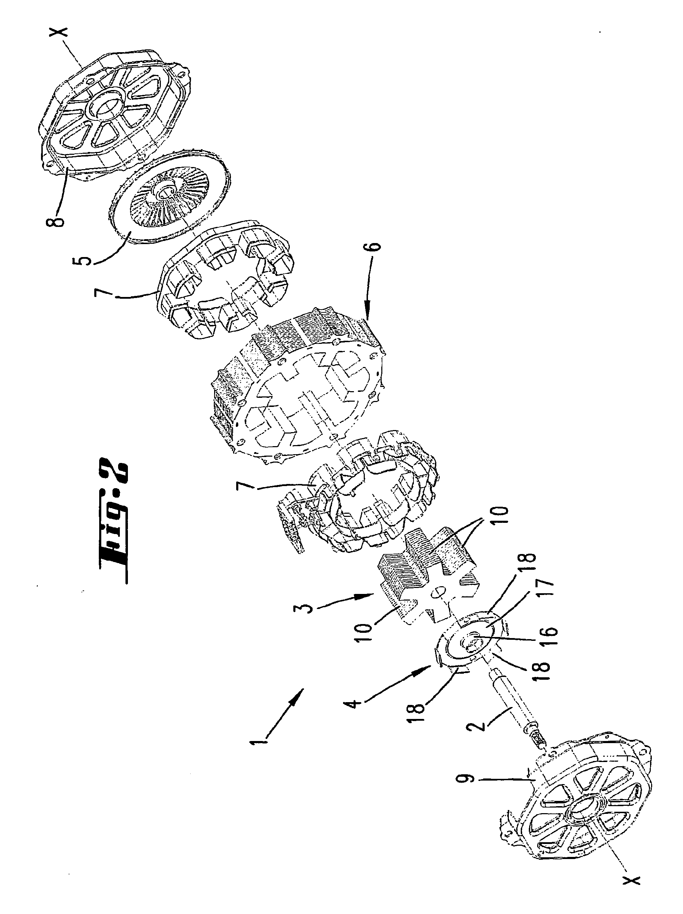

Dargestellt und beschrieben ist zunächst mit Bezug zu den Fig. 1 und 2 ein Reluktanzmotor 1, welcher im Wesentlichen besteht aus einem auf einen Rotorachskörper 2 drehfest aufsteckbaren Rotor 3, einer gleichfalls auf den Rotorachskörper 2 aufsteckbaren und drehfest mit dem Rotor 3 verbindbaren Geberscheibe 4 sowie einem auf der der Geberscheibe 4 gegenüberliegenden Seite des Rotors 3 drehfest mit diesem anordbaren Lüfter 5, einem Stator 6 mit einem zweiteiligen Statorabdeckkörper 7 zur Aufnahme von nicht dargestellten Statorspulen und zwei beidseitig des Stators 6 an diesem befestigbare, die Enden des Rotorachskörpers 2 lagernden Brücken 8, 9.

Der dargestellte Reluktanzmotor 1 ist ein sogenannter 8/ 6-Reluktanzmotor und weist somit einen Rotor 3 mit sechs Rotorsegmenten 10 und einen Stator 6 mit acht nicht näher dargestellten Statorspulen auf.

Die Rotorsegmente 10 sind winkelgleichmäßig um den Rotorgrundkörper verteilt und ragen radial ab, wobei der Rotor 3 aus einer Vielzahl von axial übereinander angeordneten, gleichen Rotorblechen 11 besteht. Jedes Rotorblech 11 ist bevorzugt ein Stanzteil und ist darüber hinaus mit einer einseitigen Backlack-Beschichtung versehen. Mittels dieser Beschichtung werden die übereinander angeordneten Rotorbleche 11 durch Hitzebeaufscblagung miteinander verklebt, zur Bildung des Rotors 3.

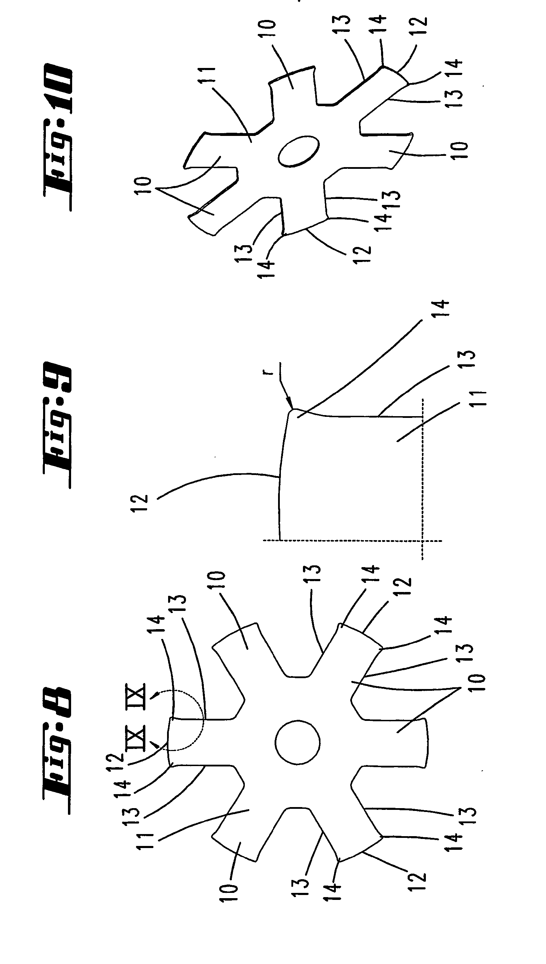

Jedes Rotorsegment 10 ist im Grundriss im Wesentlichen rechteckig geformt mit einer kreisabschnittförmigen Gestaltung der Stirnseite 12 und zwei parallel verlaufenden Flachseiten 13. Jedes Rotorsegment 10 geht in den Übergängen von den Flachseiten 13 in die Stirnseite 12 in eine Verbreiterung über, in welcher Verbreiterung der Übergang in die Stirnseite 12 abgerundet ist. Die Verrundung trägt das Bezugszeichen 14. Zufolge der endseitigen Verbreiterung des Rotorsegments 10 sind die Übergänge in Umfangsrichtung jeweils jenseits einer geradlinigen Verlängerung der Flachseiten 13 ausgebildet (vgl. insbesondere Vergrößerungsdarstellung in Fig. 9).

Der Radius r der Abrundung 14 beträgt in dem dargestellten Ausführungsbeispiel etwa 0,5 mm.

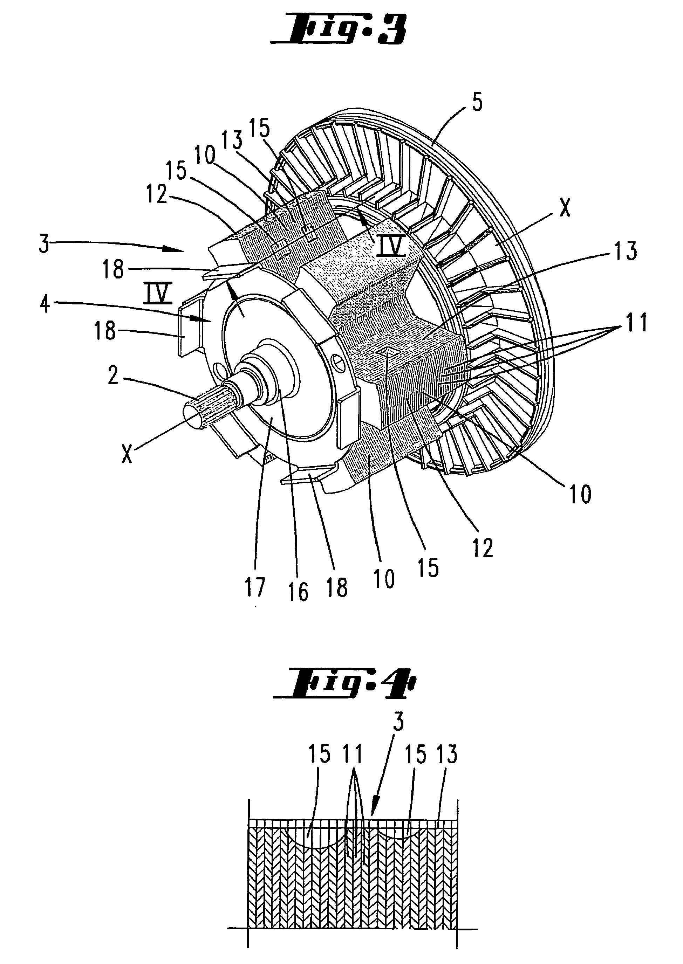

Zum Wuchten des Rotors 3 ist dieser im Bereich der Flachseiten 13 der Rotorsegmente 10 mit Ausfräsungen 15 in unterschiedlichem Ausmaß sowohl bezüglich der in Rotorachsrichtung gemessenen Länge als auch hinsichtlich der Tiefe versehen. Auch sind, wie in Fig. 3 zu erkennen, mehrere Ausfräsungen 15 im Bereich einer Flachseite 13 möglich.

Die drehfest mit dem Rotor 3 auf dem Rotorachskörper 2 befestigte Geberscheibe 4 übernimmt die Funktion einer Halteplatte für den aus einzelnen Rotorblechen 11 bestehenden Rotor 3 und dient somit zur Erhöhung der axialen Festigkeit des Rotors 3. Hierzu steht die Nabe 16 der Geberscheibe 4 gegenüber dem Scheibengrundkörper 17 vor, so dass beim Aufziehen auf den Rotorachskörper 2 eine Vorspannung im elastischen Bereich auf das Rotorpaket erreicht wird.

Auf der der Geberscheibe 4 abgewandten Seite des Rotors 3 ist der drehfest mit diesem angeordnete Lüfter 5 vorgesehen, welcher zusammen mit der Geberscheibe 4 das Rotorblechpaket fasst. Der Lüfter 5 ist hierzu auf einen gekerbten Abschnitt des Rotorachskörpers 2 aufgebracht.

Die Geberscheibe 4 ist durch Stanzen und anschließendem Hochkanten von Geberausformungen 18 gebildet, woraus resultiert, dass die Geberausformungen 18 im Grundriss linear verlaufend ausgebildet sind und in etwa sekantenartig dem Rand des Scheibengrundkörpers 17 zugeordnet sind.

Jede Geberausformung 18 erstreckt sich in einem Umfangswinkel von 30°. Demzufolge ist die zwischen zwei Geberausformungen 18 verbleibende Spaltbreite gleich einer Geberausformungsbreite, so dass eine symmetrische Geberscheibe 4 ausgeformt ist.

Zufolge dieser Ausgestaltung der Geberscheibe 4 werden bei einer Umdrehung des Rotors 3, 24 Impulse - bei Anordnung von zwei durch die Geberausformungen 18 zu durchtretenden Gabellichtschranken 19 - erzeugt Es ergeben sich vier eindeutige Po sitionsinformationen zur Ansteuerung der vier Phasen des mit acht Statorwicklungen versehenen Stators 6.

Durch die geradlinig verlaufende Anordnung der Geberausformungen 18 dienen diese zugleich als Verwirbelungsabschnitte 20. Durch diese ist eine Lüfterwirkung erreicht, mittels welcher eine automatische Reinigung der Gabellichtschranken 19 erzielt wird.

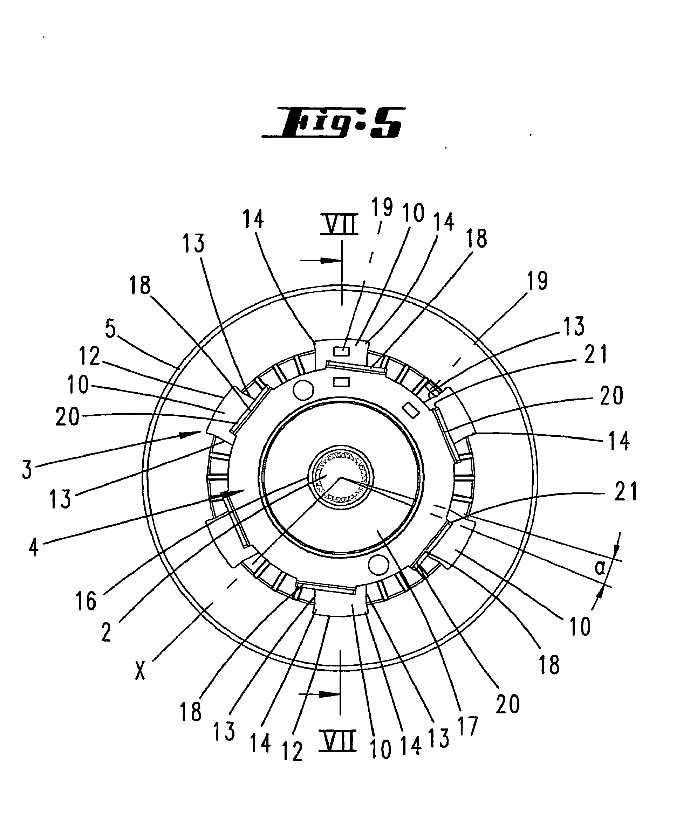

Die Zuordnung der Geberscheibe 4 zum Rotor 3 ist so gewählt, dass bei gleicher Anzahl von Geberausformungen 18 und Rotorsegmenten 10 jede Geberausformung 18 so ausgerichtet ist, dass eine Axialflanke 21 einer Geberausformung 18 bezüglich einer Flachseite 13 des zugeordneten Rotorsegments 10 einen Umfangsversatz von 7,5° aufweist (siehe Winkel Alpha in Fig. 5). Durch diesen Winkelversatz ist ein problemloser Betrieb des vierphasigen Reluktanzmotors 1 sowohl im Rechts- als auch im Linkslaufbetsieb ermöglicht.

## Patentansprüche

1. Reluktanzmotor (1) mit einem Rotor (3) und einem Stator (6), wobei der Rotor (3) Rotorsegmente (10) aufweist, die in freistehenden Bereichen im Wesentlichen rechteckig geformt sind mit einer stirnseitigen kreisabschnittförmigen Gestaltung, wobei die den Übergang der Stirnseite (12) in die gegenüberliegenden Flachseiten (13) bildenden Eckbereiche im Grundriss in Umfangsrichtung jeweils jenseits einer geradlinigen Verlängerung der Flachseiten (13) ausgebildet sind, **dadurch gekennzeichnet, dass** die Übergänge abgerundet gestaltet sind, dass der Radius der Abrundung zwischen 0,3 und 2 mm liegt und dass die Rotorsegmente im Bereich der Übergänge eine quer zur Radialerstreckung der Rotorsegmente gemessene Breite aufweisen, die dem 1,1 bis 1,3-fachen der in selber Richtung gemessenen Breite der Rotorsegmente im Bereich der Flachseiten entspricht.

2. Reluktanzmotor nach Anspruch 1, **dadurch gekennzeichnet, dass** der Rotor (3) aus einer Vielzahl von dünnen Blechen (11), die axial übereinander angeordnet sind, zusammengesetzt ist.

3. Reluktanzmotor nach Anspruch 2, **dadurch gekennzeichnet, dass** die Bleche (11) miteinander verklebt sind.

4. Reluktanzmotor nach Anspruch 3, **dadurch gekennzeichnet, dass** die Verklebung aufgrund einer Backlack-Beschichtung der Bleche (11) erreicht ist.

## Claims

1. Reluctance motor (1) with a rotor (3) and a stator (6), the rotor (3) having rotor segments (10) which, in free-standing regions, are provided with a substantially rectangular form and, at the end edges, have the configuration of a segment of a circle, wherein the corner regions providing the transition of the end edges to the opposing flat sides are in the circumferential direction in each case provided outside of a straight line taken as an extension of the flat sides, **characterized in that** the transitions are provided with a rounding, that the radius of the the rounding lies between 0.3 and 2 mm, and that the rotor segments in the region of the transitions have a width, measured transversely in relation to the radial extent of the rotor segments, corresponding to 1.1 to 1.3 times of the width measured in the same direction of the rotor segments in the region of the flat sides.

2. Reluctance motor (1) according to claim 1, **characterized in that** the rotor (3) is made up of a multiplicity of thin laminations (11), which are disposed axially one on top of the other.

3. Reluctance motor according to Claim 2, **characterized in that** the laminations (11) are adhesively bonded to one another.

4. Reluctance motor according to Claim 3, **characterized in that** the adhesive bonding is achieved on the basis of a baking varnish coating of the laminations (11).

## Revendications

1. Moteur à réluctance (1) comprenant un rotor (3) et un stator (6), dans lequel le rotor (3) présente des segments de rotor (10), qui sont formés pour l'essentiel à angle droit dans des zones libres avec une conception en forme de section circulaire côté frontal, dans lequel les coins formant la transition du côté frontal (12) vers les côtés plats (13) opposés sont configurés, vus de dessus, dans la direction périphérique respectivement de l'autre côté d'un prolongement rectiligne des côtés plats (13), **caractérisé en ce que** les transitions sont conçues arrondies, **en ce que** le rayon de l'arrondi se situe entre 0,3 et 2 mm et **en ce que** les segments de rotor dans la zone des transitions présentent une largeur mesurée transversalement à l'étendue radiale des segments de rotor qui correspond dans la zone des côtés plats à 1,1 à 1,3 fois la largeur des segments de rotor mesurée dans la même direction.

2. Moteur à réluctance selon la revendication 1, **caractérisé en ce que** le rotor (3) est composé d'une pluralité de plaques fines (11) qui sont disposées axialement les unes sur les autres.

3. Moteur à réluctance selon la revendication 2, **caractérisé en ce que** les plaques (11) sont collées les unes avec les autres.

4. Moteur à réluctance selon la revendication 3, **caractérisé en ce que** le collage est obtenu par revêtement des plaques (11) avec vernis de cuisson.
